# FASCICULE DE BREVET EUROPEEN

(11) **EP 0 437 387 B1**
(45) Date de publication et mention de la délivrance du brevet: **24.03.1993**
(21) Numéro de dépôt: 91400019.5
(22) Date de dépôt: 07.01.1991
(51) Int. Cl.: G06F 15/78, G06F 11/26

(54) **Circuit intégré à microprocesseur fonctionnant en mode ROM interne et EPROM externe**
Integrierte Mikroprozessorschaltung mit intern-ROM- und extern-EPROM-Arbeitsweise
Microprocessor integrated circuit with internal ROM and external EPROM working mode

(30) Priorité: 09.01.1990 FR 9000169
(43) Date de publication de la demande: 17.07.1991
(73) Titulaire: SGS-THOMSON MICROELECTRONICS S.A., 94250 Gentilly (FR)
(72) Inventeur: Nicolai, Jean, F-75116 Paris (FR)
(74) Mandataire: Schmit, Christian Norbert Marie

(56) Documents cités:
- EP-A- 0 127 440
- US-A- 4 609 985
- PATENT ABSTRACTS OF JAPAN, vol. 6, no. 245 (P-159)[1123], 3 décembre 1982; & JP-A-57 143 657 (FUJITSU K.K.) 04-09-1982
- PATENT ABSTRACTS OF JAPAN, vol. 11, no. 79 (P-555)[2526], 11 mars 1987; & JP-A-61 235 953 (HITACHI LTD) 21-10-1986

## Description

L'invention concerne les circuits intégrés à microprocesseurs. Elle concerne plus spécialement les circuits comportant sur une même puce semiconductrice à la fois un microprocesseur et une mémoire morte de programmes. La mémoire morte contient notamment un ou plusieurs programmes à exécuter par le microprocesseur. Un tel circuit est par exemple décrit dans le document US-A-4 609 985.

Les circuits tout particulièrement concernés par la présente invention sont notamment les microcontrôleurs à faible coût spécialisés pour un client et une application déterminée.

Le problème principal que l'on rencontre dans la réalisation d'un tel circuit est la phase de mise au point du circuit et des programmes d'utilisation stockés en mémoire morte. Le document cité n'indique cependant pas comment mettre au point le circuit intégré fabriqué.

En effet, la mémoire morte est réalisée par masquage photolithographique, c'est-à-dire que les données enregistrées dans la mémoire sont définies par une configuration particulière de masque photolithographique. Par exemple, chaque cellule de mémoire est constituée par un transistor et la donnée binaire mémorisée dans cette cellule est définie par le fait que le transistor a été masqué ou non pendant une opération d'implantation d'enrichissement ou de déplétion. Ou encore, la mémoire est constituée par des transistors agencés en matrice de lignes et de colonnes et la donnée binaire mémorisée par une cellule est définie par le fait qu'il y a ou qu'il n'y a pas de contact conducteur reliant le transistor à une ligne ou une colonne passant à côté de lui (masquage ou absence de pendant l'opération d'ouverture de régions de contact dans une couche isolante).

La difficulté de mise au point est la suivante: il faut écrire un programme d'application du microprocesseur et réaliser le microprocesseur avec ce programme stocké en mémoire morte. Puis il faut tester le circuit intégré. Si l'application est un peu complexe, il y aura probablement des erreurs dans le programme. Pour corriger les erreurs, il faut réaliser à nouveau un circuit intégré comprenant le microprocesseur et un nouveau programme corrigé. Cela suppose un nouveau jeu de masques. Il n'est pas possible de recommencer plusieurs fois cette opération très coûteuse et très longue. Par conséquent, en pratique il faudrait que le programme d'application du microprocesseur marche parfaitement du premier coup. L'expérience montre que c'est rarement le cas. De plus, cette méthode permet de tester le microprocesseur uniquement dans le cadre de l'exécution des programmes mis dans la mémoire morte; elle ne permet pas de tester le microprocesseur ou les autres éléments de circuit indépendamment de ces programmes. En effet, dans les microcontroleurs à faible coût (applications radio, autoradio, HiFi, télévision, etc.), la simple mise sous tension du circuit met en route les programmes stockés dans la mémoire morte; le microprocesseur ne peut pas faire autre chose qu'exécuter ces programmes.

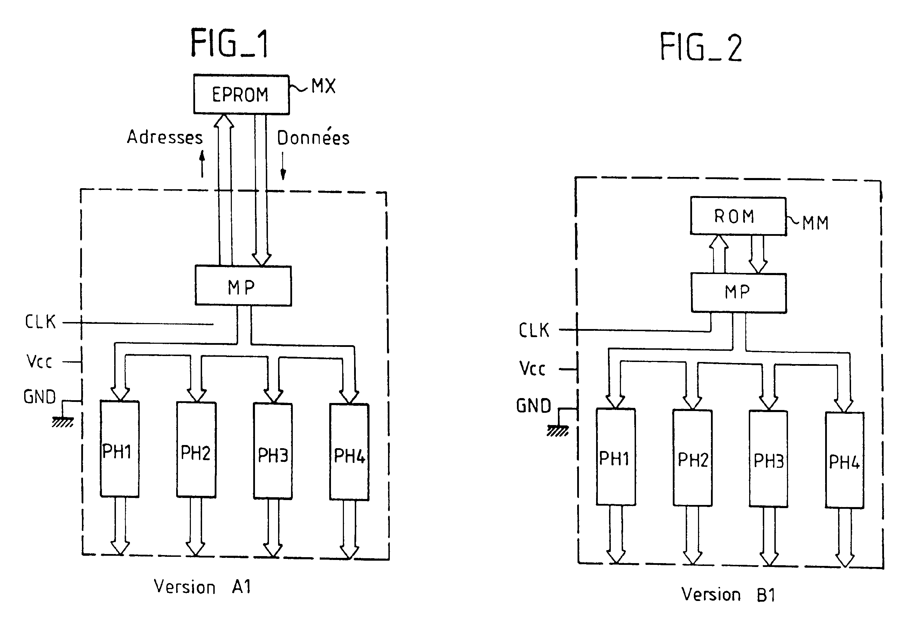

C'est pourquoi une méthode couramment adoptée est la suivante, expliquée en référence aux figures 1 et 2 : on réalise deux versions de circuit intégré différentes, proches l'un de l'autre, qui sont une version A1 et une version B1.

La première version de circuit (version A1), destinée à la mise au point, comprend un microprocesseur MP et les éléments de circuit qui peuvent être nécessaires dans l'application considérée (notamment des périphériques d'entrée/sortie PH1, PH2, etc...), mais elle ne comporte pas de mémoire morte de programmes, ou en tout cas cette mémoire n'est pas utilisable.

Pour l'exécution de programmes, le microprocesseur MP est relié à des bornes d'entrée/sortie du circuit intégré spécialement prévues pour la phase de mise au point. Ces bornes d'entrée/sortie sont destinées à la transmission de données et d'adresses entre le microprocesseur et une mémoire MX électriquement programmable, extérieure au circuit intégré. La mémoire extérieure (EPROM ou EEPROM) contient les programmes à exécuter. Elle est électriquement programmable et par conséquent les programmes peuvent être modifiés à volonté, pendant tout le temps que dure la mise au point.

On aboutit à une version finale de programmes correspondant à l'application désirée par le client.

On réalise alors le dessin et la fabrication d'une version définitive B1 du circuit intégré (figure 2), version qui contient une mémoire morte de programmes masquée avec les données de programmes correspondant aux programmes définitifs non modifiables. Cette version B1 ne comprend pas les bornes d'entrée sortie qui n'étaient destinés qu'à la transmission de programmes issus de la mémoire externe.

Ce mode de mise au point d'un circuit intégré et de son application comporte les inconvénients suivants :
- comme les versions A1 et B1 du circuit sont différentes, elles nécessitent deux jeux de masques (très coûteux), deux vérifications des masques, deux lots de fabrication (très coûteux) alors qu'en tout état de cause la version A1 n'est nécessaire que pour produire un petit nombre de circuits à des fins d'étude et de mise au point; la version A1 ne sera pas une version fabriquée industriellement en série pour le client;
- d'autre part, bien que le circuit A1 ne soit destiné qu'à la mise au point, il doit cependant être réalisé industriellement en série pour détecter les erreurs, bogues, etc., qui pourraient apparaître dans une production de série. Cela introduit un délai considérable dans le déroulement d'un projet de développement et fabrication d'un nouveau circuit pour un client.

La présente invention a pour but de proposer un système plus efficace, moins long, et moins coûteux pour développer un circuit intégré à microprocesseur incorporant sur la même puce le microprocesseur et une mémoire morte de programmes.

Pour cela, on propose de réaliser une version pratiquement unique de circuit intégré qui est à la fois la version destinée à la mise au point et la version industrielle définitive, à l'exception du fait que la version définitive peut différer de la version destinée au test par le contenu de la mémoire morte. On y parvient notamment en prévoyant que le circuit intégré possède deux modes de fonctionnement, l'un où le microprocesseur exécute les programmes en mémoire morte interne et l'autre où le microprocesseur exécute des programmes modifiables contenus dans une mémoire externe, avec des moyens pour permettre la transmission d'adresses et données entre le microprocesseur et la mémoire externe dans le second mode. Pour qu'il n'y ait pas à réaliser deux versions différentes de circuit, et pour que la version pratiquement unique ne soit pas exagérément coûteuse, on prévoit que les moyens nécessaires au fonctionnement avec mémoire de programmes externe sont très peu encombrants et peuvent subsister sur la puce définitive. En particulier, une manière d'y parvenir est d'utiliser un plot de contact de la puce pour la transmission d'adresses et de données en série à travers ce plot entre le microprocesseur et une mémoire externe électriquement programmable, et un plot de contact de la puce réservé à la réception par la puce d'un signal de sélection de mode de fonctionnement du circuit. De cette manière, pendant la phase de mise au point on applique un signal de sélection correspondant au mode dans lequel le microprocesseur exécute les programmes de mémoire externe transmis en série à travers le plot de contact spécifique; puis, pour le circuit définitivement réalisé en série et comportant le programme figé en mémoire interne, le signal de sélection de mode appliqué est celui qui correspond au mode normal définitif: exécution des programmes de la mémoire morte interne.

La puce de circuit intégré selon l'invention comporte globalement les éléments supplémentaires suivants, par rapport à une puce qui ne nécessiterait pas du tout de phase de mise au point: un plot de contact pour la transmission en série d'adresses et de données de programme entre la mémoire externe et le microprocesseur, et un plot de contact de sélection de mode; et un multiplexeur pour aiguiller les adresses et données soit vers la mémoire externe soit vers la mémoire interne en fonction du signal de sélection reçu sur le plot de sélection. Eventuellement, il peut être nécessaire d'avoir en outre un plot de contact pour la transmission de signaux de synchronisation, notamment pour définir si ce sont des adresses ou des données qui sont échangées à un instant donné à travers le plot de transmission en série. Enfin, la puce peut comprendre des éléments de circuits additionnels tels que des convertisseurs parallèle/série et série/parallèle pour les cas où le microprocesseur ne peut travailler qu'avec des signaux binaires en parallèle. L'ensemble de ces circuits additionnels et plots de contact additionnels est suffisamment restreint en encombrement sur la puce pour qu'ils puissent rester sur la version définitive du circuit fabriqué, bien qu'ils soient en principe inutiles pour le circuit définitif. C'est ce qui permet d'avoir pratiquement une seule version de circuit, seul le masque correspondant à la définition des données de mémoire morte étant spécifique de la version finale.

Il faut d'ailleurs signaler que les plots de contact supplémentaires ne sont pas nécessairement reliés à des broches extérieures du boîtier du circuit définitif. Pour la première version, destinée à la mise au point, les plots de contact spécifiques de cette mise au point doivent être reliés à des broches extérieures du boîtier pour qu'on puisse transmettre les signaux nécessaires. Mais pour la version définitive, il n'est plus forcément nécessaire de relier tous ces plots spécifiques à des broches: par exemple le plot de transmission d'adresses et données en série peut rester en l'air puisqu'il n'a plus rien à transmettre. Il en est de même du plot de synchronisation. Quant au plot de sélection de mode, on peut très bien prévoir qu'il est relié par une résistance ou un transistor ("pull-up" ou "pull-down") à une borne d'alimentation du circuit de sorte qu'on fixe l'état binaire auquel il est porté dans la version définitive sans qu'il soit nécessaire d'appliquer cet état binaire à partir d'une broche extérieure spéciale.

Une possibilité de mise en oeuvre de l'invention consisterait à utiliser, pour les circuits de la première version, un boîtier de circuit intégré ayant quelques broches supplémentaires par rapport à celles qui sont nécessaires dans la version définitive. Pour le circuit définitif, un boîtier à nombre de broches plus réduit serait utilisé, les plots de contact spécifiques de la phase de mise au point restant non connectés.

Par conséquent, en résumé, selon un premier aspect important de l'invention, le circuit intégré comporte un plot de contact spécifique utilisable pendant une phase de développement du circuit intégré, et des moyens pour permettre pendant cette phase la transmission d'adresses et de données en série à travers ce plot et pour faire exécuter au microprocesseur un programme transmis à travers ce plot et issu d'une mémoire électriquement programmable extérieure au circuit.

Par ce moyen, le microprocesseur peut être testé à partir de programmes extérieurs au circuit intégré (programmes de test ou programmes de l'application finale envisagée pour le circuit). Le développement est fait à partir d'une présérie industrielle. A la fin du développement, le programme final mis au point est défini et la configuration de masque qui servira au stockage en mémoire morte est établie définitivement. Si le programme n'a pas été modifié en cours de mise au point, les circuits peuvent être fabriqués en série. Si le programme a du être modifié, les masques autres que le masque de configuration de données de mémoire morte sont inchangés. La réalisation du circuit définitif ne demande donc qu'un seul masque spécifique différent des masques déjà élaborés pour la présérie ayant servi au développement.

Un plot de contact de sélection de mode de fonctionnement du circuit intégré est prévu sur la puce. Ce plot peut recevoir un signal électrique de sélection de mode signal binaire en principe). Pour une valeur du signal, le mode est le mode normal de fonctionnement du circuit, dans lequel le microprocesseur exécute des programmes stockés dans la mémoire morte du circuit. Pour une autre valeur du signal de sélection de mode, le mode est le mode de mise au point dans lequel le microprocesseur exécute des programmes contenus dans la mémoire externe, ces programmes étant transmis en série à travers la broche spécifique du boîtier.

Et d'autre part, selon un autre aspect de l'invention, pour faire la mise au point du circuit intégré, on prévoit que le circuit intégré comporte d'une part des moyens pour faire exécuter par le microprocesseur soit un programme interne contenu dans la mémoire morte du circuit, soit un programme externe contenu dans une mémoire externe et transmis à travers au moins un plot de contact spécifique de la puce de circuit intégré, le choix entre le programme externe et le programme interne étant commandé par un signal de sélection appliqué sur un plot de contact de sélection de mode prévu sur la puce, l'un au moins desdits plots de contact n'étant pas relié à une broche extérieure du boîtier du circuit intégré dans sa version définitive.

D'autres caractéristiques et avantages de l'invention apparaîtront à la lecture de la description détaillée qui suit et qui est faite en référence aux dessins annexés dans lesquels :
- les figures 1 et 2 représentent les versions A1 (circuit pour la mise au point) et B1 (circuit définitif) d'une puce de circuit intégré contenant un microprocesseur et une mémoire morte de programmes interne;
- la figure 3 représente la version pratiquement unique du circuit intégré réalisé selon l'invention et permettant la mise au point puis l'utilisation définitive.
- les figures 4 à 7 représentent divers modes de connexion des plots de contact de la puce à des broches extérieures de boîtier, dans la version provisoire et dans la version définitive du circuit.

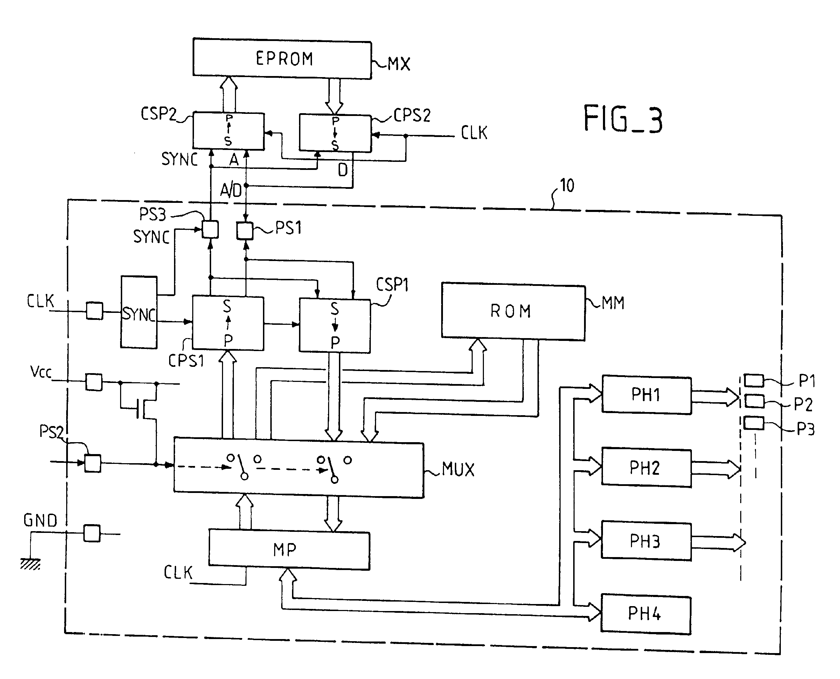

Sur la figure 3, la puce de circuit intégré est désignée par la référence 10. Elle comporte un certain nombre d'éléments de circuit et notamment un microprocesseur MP et des circuits périphériques divers, PH1, PH2, ..., ainsi qu'une mémoire morte de programmes MM. La puce comporte également un certain nombre de plots de contact d'accès P1, P2, P3, etc., destinés à être reliés à des broches extérieures lorsque la puce est enfermée dans un boîtier; ces plots servent à la transmission de signaux entre la puce et l'extérieur.

Les éléments de circuit et plots de contact nécessaires au fonctionnement de la puce dans la fonction qu'elle doit remplir pour son utilisateur final peuvent être quelconques et ils n'ont pas besoin d'être décrits. Le microprocesseur fonctionne sous la commande des programmes contenus dans la mémoire morte interne MM, et les périphériques permettent de recevoir et transmettre des signaux en fonction de ces programmes, à travers les plots de contact et les broches de boîtier qui sont reliés à ces plots.

Les éléments supplémentaires qui font partie de la puce et qui sont prévus spécifiquement pour faciliter la mise au point des programmes d'application de la mémoire morte sont les suivants dans l'exemple de la figure 1 :
- un plot de contact PS1 dit "plot de transmission série", destiné à la transmission en série d'adresses et de données entre le microprocesseur et une mémoire externe MX, électriquement programmable (EPROM ou EEPROM);
- un plot de contact PS2 dit "plot de sélection de mode", destiné à recevoir un signal de sélection de mode permettant de faire passer le circuit d'un premier mode (mode normal), dans lequel le microprocesseur exécute les programmes de la mémoire interne MM, à un second mode (mode de mise au point) dans lequel le microprocesseur exécute les programmes contenus dans la mémoire externe et transmis à travers le plot PS1;
- éventuellement un troisième plot PS3 dit "de synchronisation", servant à définir à un instant donné si les signaux transmis sont des adresses envoyées à la mémoire ou des données reçues de la mémoire;
- un multiplexeur MUX commandé par le plot de sélection de mode PS2, pour aiguiller les adresses et données soit entre le microprocesseur et la mémoire interne soit entre le microprocesseur et la mémoire externe, selon l'état binaire présent sur le plot PS2;
- si nécessaire des convertisseurs série/parallèle CSP1 et parallèle/série CPS1, dans le cas où le microprocesseur travaille sur des adresses et des données constitués par des mots binaires en parallèle; de cette manière, les données parallèle issues du microprocesseur à destination de la mémoire externe sont converties en données série avant de passer vers le plot PS1, et réciproquement, les données série provenant de la mémoire externe à travers le plot PS1 sont converties en données parallèle; la mémoire externe peut elle même avoir besoin de convertisseurs parallèle série et série parallèle pour communiquer en série avec le plot PS1. Ces convertisseurs supplémentaires CPS2 et CSP2 ne font pas partie du circuit intégré.

Le schéma de la figure 3 correspond aux deux versions du circuit intégré réalisées: version de mise au point fabriquée en très petite série, et version définitive, très proche de la version de mise au point et réalisée en grande série. Les différences entre les deux versions sont les suivantes :
- la version définitive comporte des données de programmes de mémoire morte définitives, alors que la version proviosire comporte des données différentes : soit des programmes qui ne sont pas tout à fait au point (par exemple une première version de ces programmes) soit des programmes ou données permettant des tests, soit encore aucun programme et aucune donnée; un seul masque photolithographique sert à définir ces données; par conséquent la version définitive ne diffère de la version provisoire que par un seul masque;
- la version définitive peut, dans certains modes de réalisation de l'invention, avoir un ou plusieurs de ses plots de contact spécifiques PS1 et/ou PS2, et/ou PS3, non connectés à des broches externes du boîtier du circuit. La version provisoire pour la mise au point nécessite au contraire une connexion de ces plots de contact spécifiques PS1, PS2, PS3 à des broches du boîtier.

Pour le plot de contact PS1 (plot de transmission série), on comprend qu'après la phase de mise au point il n'est plus nécessaire de le connecter puisqu'il n'y a plus besoin de communication avec la mémoire externe.

Le plot PS3 n'est plus utile non plus puisqu'il sert à la synchronisation des transmissions série à travers le plot PS1.

Quant au plot PS2, de sélection de mode, il suffit qu'un niveau logique bien déterminé (par exemple niveau haut) soit appliqué sur ce plot dans la version définitive, ce niveau correspondant au mode de fonctionnement normal. Et il faut cependant qu'on puisse appliquer sur ce plot un niveau contraire lorsque ce plot est relié à une broche externe dans la version destinée à la mise au point. Pour cela, on peut par exemple relier le plot PS2 à un plot d'alimentation Vcc du circuit intégré à travers un élément résistif ou un transistor "pull-up". De cette manière, lorsqu'on impose un niveau bas par un signal externe sur le plot PS2, ce niveau bas commande le multiplexeur MUX dans un sens. Mais quand on n'applique pas de signal sur le plot PS2, le transistor ou la résistance tire ce plot vers le niveau haut et commande le multiplexeur dans l'autre sens.

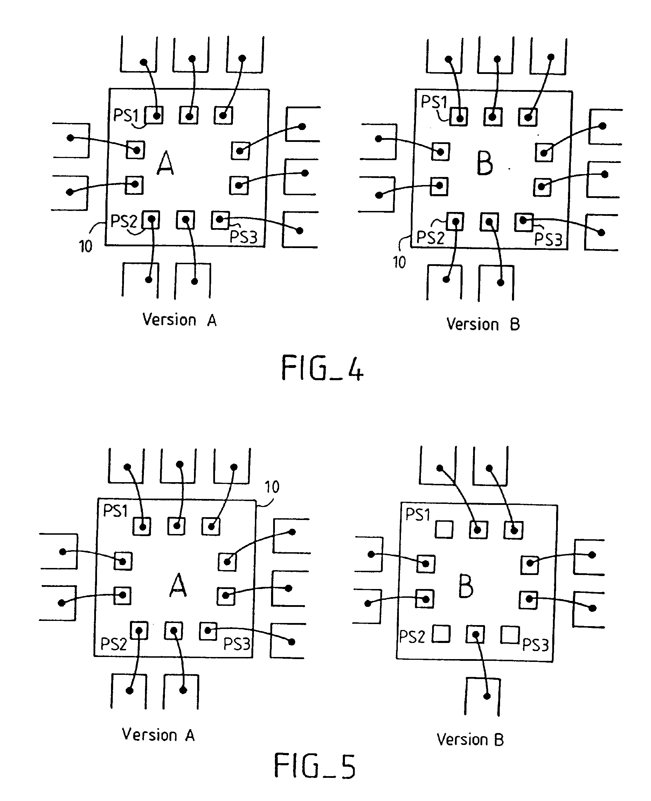

Il y a donc plusieurs possibilités de mettre en oeuvre l'invention en ce qui concerne l'encapsulation dans un boîtier. Dans une première possibilité (figure 4), les plots spécifiques PS1, PS2, PS3 sont connectés à des broches du boîtier aussi bien dans la version provisoire (A) que dans la version définitive (B). Le boîtier comporte donc autant de broches qu'il est nécessaire pour les fonctions qu'il doit remplir pour l'utilisateur final, plus les trois broches correspondant aux plots PS1, PS2, PS3. Cela présente l'avantage d'utiliser le même boîtier pour la version provisoire et pour la version définitive.

Dans une autre possibilité (figure 5), les plots spécifiques ne sont pas connectés dans la version définitive (B). Mais dans la version provisoire (A) on utilise un boîtier comportant trois broches de plus que le boîtier de la version définitive.

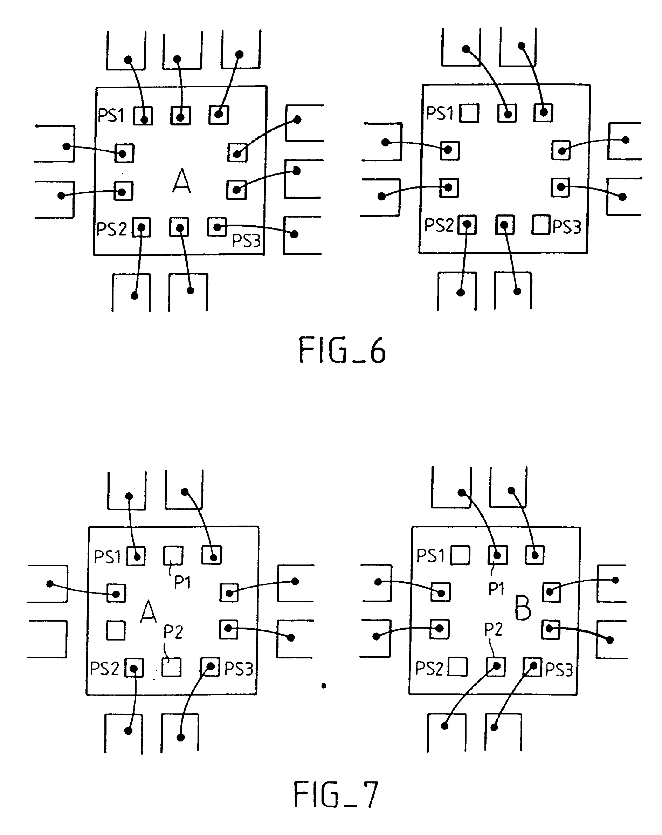

Dans une autre possibilité encore (figure 6), un ou deux des plots spécifiques sont connectés dans la version définitive (B) comme dans la version provisoire (A), le ou les autres plots spécifiques restant déconnectés pour la version définitive.

Enfin, on peut envisager exceptionnellement (figure 7) qu'un ou plusieurs des plots de contact spécifiques PS1, PS2, PS3, soient connectés dans la version provisoire à des broches de contact qui sont réservées dans la version définitive à d'autres usages, donc à une connexion avec d'autres plots P1, P2, P3 (sorties de certains périphériques, etc.). Mais il faut bien comprendre que dans ce cas la phase de mise au point ne permet pas de tester complètement l'application puisque certaines broches du circuit ne seront pas dans la configuration qu'elles doivent avoir dans la version définitive. Cela ne peut donc en principe s'envisager que pour des broches P1, P2, P3 qui ne sont pas critiques dans l'application.

Par ailleurs, il est envisageable aussi, mais avec les mêmes inconvénients que dans le cas précédent, que les plots de contact spécifiques soient confondus avec des plots de contact normalement utilisés dans la version définitive, avec des circuits de multiplexage permettant d'attribuer à ces plots soit une fonction spécifique de la phase de mise au point, soit leur fonction normale de la version définitive.

La mise au point de la version définitive se fait de la manière suivante :
La première version du circuit est fabriquée en présérie; elle est testée grâce à des programmes installés dans la mémoire externe MX et transmis en mode série à travers le plot PS1 avec l'aide de signaux de synchronisation transmis par le plot PS3 (ces signaux servant également à la commande des convertisseurs CSP1, CSP2, CPS1, CPS2); ces programmes peuvent être modifiés au fur et à mesure des besoins pendant la phase de mise au point, jusqu'à ce qu'on arrive à des programmes donnant satisfaction. Pendant cette mise au point, le plot PS2 est porté à un niveau logique tel que le multiplexeur MUX relie le microprocesseur à la mémoire externe MX et non à la mémoire interne MM.

Un jeu de masques est alors élaboré pour la version définitive (un seul masque différent de ceux de la version provisoire). L'encapsulation est faite selon l'une des manières indiquées ci-dessus. Le plot PS2 est relié à un niveau logique tel que le multiplexeur relie le microprocesseur à la mémoire interne soit par une résistance ou un transistor "pull-up" présents dès l'origine dans les deux versions, soit encore par l'application d'un signal externe si le plot PS2 est relié à une broche extérieure dans la version définitive.

## Revendications

1. Circuit intégré à microprocesseur comportant, sur une même puce de circuit intégré encapsulée dans un boîtier, un microprocesseur (MP) et une mémoire morte interne de programme (MM) pour contenir un programme à exécuter par le microprocesseur, caractérisé en ce que la puce comporte au moins un plot de contact (PS1) permettant la transmission d'adresses et de données entre le microprocesseur et une mémoire (MX) électriquement programmable extérieure au circuit intégré, au moins un plot de contact (PS2) de sélection de mode de fonctionnement du microprocesseur, et des moyens pour faire exécuter au microprocesseur soit un programme contenu dans la mémoire morte interne soit un programme contenu dans la mémoire externe, en fonction d'un signal présent sur le plot de contact de sélection de mode, l'un au moins des plots de contact mentionnés n'étant pas relié à une broche extérieure du boîtier.

2. Circuit intégré selon la revendication 1, caractérisé en ce que le plot de contact de sélection de mode est relié, à travers un élément de circuit résistif ou un transistor, à une des bornes d'alimentation du circuit intégré.

3. Circuit intégré selon l'une des revendications 1 et 2, caractérisé en ce qu'il comporte des convertisseurs série/parallèle et parallèle série entre le microprocesseur et le plot de transmission série.

4. Circuit intégré selon l'une des revendications 1 à 3, caractérisé en ce qu'il comporte un multiplexeur commandé par le plot de sélection de mode pour connecter le microprocesseur soit à la mémoire interne soit à la mémoire externe.

5. Circuit intégré selon l'une des revendications 1 à 4, caractérisé en ce qu'il comporte un plot de contact supplémentaire (PS3) pour transmettre un signal de synchronisation définissant si les signaux présents sur le plot de transmission série sont des adresses ou des données.

6. Procédé de fabrication d'une puce de circuit intégré comportant un microprocesseur (MP) et une mémoire morte (MM) de programmes pour le microprocesseur, le procédé comportant une phase de mise au point des circuits de la puce et des programmes contenus dans la mémoire morte, caractérisé en ce que :
- pendant la phase de mise au point, effectuée sur une première version du circuit intégré, un niveau logique spécifique est appliqué sur un plot de contact (PS2) de la puce pour mettre le circuit dans un mode où le microprocesseur exécute des programmes contenus dans une mémoire (MX) extérieure électriquement programmable;
- toujours pendant cette phase, le microprocesseur échange des adresses et des données en mode série avec la mémoire extérieure (MX) à travers une borne extérieure reliée à un autre plot de contact (PS1) du circuit intégré;
- après la phase de mise au point, les circuits sont fabriqués dans une version finale ne différant de la première version que par le contenu de la mémoire interne, et un niveau logique complémentaire dudit niveau spécifique est systématiquement appliqué sur le premier plot de contact mentionné (PS2) pour faire exécuter au microprocesseur des programmes contenus dans la mémoire morte de programmes présente sur la puce.

7. Procédé de fabrication selon la revendication 6, caractérisé en ce que pour la phase de mise au point, les puces sont encapsulées dans un boîtier ayant plus de broches extérieures que les boîtiers d'encapsulation des puces de la version définitive, au moins un des plots de contact mentionnés n'étant pas connecté à une broche extérieure dans la version définitive.

## Patentansprüche

1. Integrierte Mikroprozessorschaltung, umfassend auf einem selben in einem Gehäuse eingekapselten IS-Chip einen Mikroprozessor (MP) und einen internen Programmfestspeicher (MM), um ein durch den Mikroprozessor auszuführendes Programm zu enthalten, dadurch **gekennzeichnet,** daß der Chip wenigstens eine Kontaktanschlußeinrichtung (PS1), die die Übertragung von Adressen und von Daten zwischen dem Mikroprozessor und einem außerhalb der integrierten Schaltung befindlichen elektrisch programmierbaren Speicher (MX) gestattet, wenigstens eine Kontaktanschlußeinrichtung (PS2) zur Betriebsartsauswahl des Mikroprozessors und Mittel umfaßt, um am Mikroprozessor entweder ein im internen Festspeicher enthaltenes Programm oder ein im externen Speicher enthaltenes Programm abhängig von einem an der Kontaktanschlußeinrichtung zur Betriebsartsauswahl anliegenden Signal ausführen zu lassen, wobei wenigstens eine der erwähnten Kontaktanschlußeinrichtungen nicht mit einem außerhalb des Gehäuses befindlichen Anschluß verbunden ist.

2. Integrierte Schaltung nach Anspruch 1, dadurch **gekennzeichnet,** daß die Kontaktanschlußeinrichtung zur Betriebsartsauswahl über ein resistives Schaltungselement oder einen Transistor mit einer der Versorgungsanschlußeinrichtungen der integrierten Schaltung verbunden ist.

3. Integrierte Schaltung nach einem der Ansprüche 1 und 2, dadurch **gekennzeichnet,** daß sie Seriell/Parallel- und Parallel-Seriell-Umsetzer zwischen dem Mikroprozessor und der seriellen Übertragungsanschlußeinrichtung umfaßt.

4. Integrierte Schaltung nach einem der Ansprüche 1 bis 3, dadurch **gekennzeichnet,** daß sie einen durch die Betriebsartsauswahl-Anschlußeinrichtung gesteuerten Multiplexer umfaßt, um den Mikroprozessor entweder mit dem internen Speicher oder mit dem externen Speicher zu verbinden.

5. Integrierte Schaltung nach einem der Ansprüche 1 bis 4, dadurch **gekennzeichnet,** daß sie eine zusätzliche Kontaktanschlußeinrichtung (PS3) zur Übertragung eines Synchronisationssignals umfaßt, das festlegt, ob die an der seriellen Übertragungsanschlußeinrichtung anliegenden Signale Adressen oder Daten sind.

6. Verfahren zur Herstellung eines IS-Chips, umfassend einen Mikroprozessor (MP) und einen Festspeicher (MM) für Programme für den Mikroprozessor, wobei das Verfahren eine Stufe zur Einrichtung der Schaltungen des Chips und der im Festspeicher enthaltenen Programme umfaßt, dadurch **gekennzeichnet,** daß
- während der an einer ersten Version der integrierten Schaltung ausgeführten Einrichtung ein spezieller logischer Pegel an eine Kontaktanschlußeinrichtung (PS2) des Chips angelegt wird, um die Schaltung in eine Betriebsart zu versetzen, in der der Mikroprozessor in einem elektrisch programmierbaren externen Speicher (MX) enthaltene Programme ausführt,
- während dieser Phase der Mikroprozessor immer Adressen und Daten in serieller Betriebsart mit dem externen Speicher (MX) über einen mit einer anderen Kontaktanschlußeinrichtung (PS1) der integrierten Schaltung verbundenen externen Anschluß austauscht;
- nach der Einrichtungsstufe die Schaltungen in einer Endversion hergestellt werden, die sich von der ersten Version nur im Inhalt des internen Speichers unterscheidet, und ein zum speziellen Pegel komplementärer logischer Pegel systematisch auf die erwähnte erste Kontaktanschlußeinrichtung (PS2) gegeben wird, um am Mikroprozessor in dem auf dem Chip vorhandenen Programmfestspeicher enthaltene Programme ausführen zu lassen.

7. Herstellungsverfahren nach Anspruch 6, dadurch **gekennzeichnet,** daß für die Einrichtungsstufe die Chips in einem Gehäuse eingekapselt werden, das mehr externe Anschlüsse als die Einkapselungsgehäuse der Chips der endgültigen Version aufweist, wobei wenigstens eine der erwähnten Kontaktanschlußeinrichtungen nicht mit einem externen Anschluß in der endgültigen Version verbunden ist.

## Claims

1. A microprocessor integrated circuit, comprising on one and the same circuit chip which is housed in a package, a microprocessor (MP) and an internal program ROM (MM) which is to contain a program to be executed by the microprocessor, characterised in that the chip has at least one contact (PS1) which allows addresses and data to be transmitted between the microprocessor and an electrically programmable memory (MX) external of the integrated circuit, at least one contact (PS2) for selecting the operating mode of the microprocessor, and means for making the microprocessor execute either a program contained in the internal ROM or a program contained in the external memory actuated by a signal at the operating mode selecting contact, at least one of the contacts mentioned not being connected to an external pin on the package.

2. An integrated circuit according to Claim 1, characterised in that the operating mode selecting contact is connected via a resistor circuit element or a transistor to one of the supply terminals of the integrated circuit.

3. An integrated circuit according to Claim 1 or 2, characterised in that it includes series-parallel and parallel-series convertors between the microprocessor and the series transmission contact.

4. An integrated circuit according to any one of Claims 1 to 3, characterised in that it includes a multiplexer controlled by the mode selecting contact in order to connect the microprocessor either to the internal memory or to the external memory.

5. An integrated circuit according to any one of Claims 1 to 4, characterised in that it has an additional contact (PS3) for transmitting a synchronizing signal defining whether the signals at the series transmission contact are addresses or data.

6. A manufacturing process for an integrated circuit chip having a microprocessor (MP) and a program ROM (MM) for the microprocessor, the process including a debugging phase for the circuits on the chip and the programs contained in the ROM, characterised in that
- during the debugging phase performed on a first version of the integrated circuit, a specific logic level is applied to a contact (PS2) on the chip to put the circuit into a mode where the microprocessor executes programs contained in an external electrically programmable memory (MX);
- during this phase the microprocessor constantly exchanges address and data in series mode with the external memory (MX) via an external terminal connected to another contact (S1) on the integrated circuit;
- after the debugging phase, the circuits are produced in a final version which only differs from the first version in the contents of the internal memory, and a logic level which is complementary to the said specific level is systematically applied to the first contact mentioned (PS2) in order to make the microprocessor execute programs contained in the program ROM on the chip.

7. A manufacturing process according to Claim 6, characterised in that for the debugging phase the chips are encapsulated in a package having more external pins than the encapsulating packages for the definitive version, at least one of the contacts mentioned not being connected to an external pin in the definitive version.
